# EUROPÄISCHE PATENTSCHRIFT

(11) **EP 1 138 736 B1**
(45) Veröffentlichungstag und Bekanntmachung des Hinweises auf die Patenterteilung: **02.07.2008**
(21) Anmeldenummer: 01105530.8
(22) Anmeldetag: 06.03.2001
(51) Int. Cl.: C09J 151/00, C08F 265/06, C09J 7/02

(54) **Herstellung von Acrylat-Schmelzhaftklebern aus wässrigen dispersen Systemen**
Production of acrylate hot melt adhesives from aqueous disperse systems
Production d'adhésifs thermofusibles à base d'acrylate à partir de systèmes aqueux dispersés

(30) Priorität: 30.03.2000 DE 10015981
(43) Veröffentlichungstag der Anmeldung: 04.10.2001
(73) Patentinhaber: tesa AG, 20253 Hamburg (DE)
(72) Erfinder: Gleichenhagen, Peter, Dr., 22417 Hamburg (DE); Müller, Annemarie, 22459 Hamburg (DE)

(56) Entgegenhaltungen:
- DE-A- 2 455 133
- US-A- 4 456 726

## Beschreibung

### Gegenstand der Erfindung

Gegenstand der Erfindung sind haftklebende schmelzbare Polymere und deren Mischungen, die in wäßriger Dispersion ohne Verwendung von Lösemitteln erzeugt werden und nach Entfernen der wäßrigen Phase aus der Schmelze beschichtet und vernetzt werden können. Die Erfindung ist eine Fortsetzung der DE 2 455 133.

### Hintergrund der Erfindung

Aus ökologischen und wirtschaftlichen Gründen wird für Beschichtungen eine Verringerung des Einsatzes von Lösemitteln in zunehmendem Maße angestrebt. Dies gilt auch für die Herstellung haftklebender Oberflächen. Für diesen Zweck werden zwei grundlegende Verfahren eingesetzt, nämlich die Filmbildung durch Trocknen wässriger Beschichtungen aus Dispersionen oder die Filmbildung aus Polymerschmelzen.

Beide Verfahrensweisen sind mit Nachteilen behaftet : So stört bei der Trocknung von Beschichtungen aus wässrigen Dispersionen der Erhalt der Emulgatorhüllen bei der Filmbildung aus den von Emulgator umhüllten Dispersionspartikeln. Außerdem wird beim Abdampfen der Wasserphase aus der Beschichtung freier Emulgator mit der Wasserströmung an die Filmoberflächen geschleppt und dort angereichert.

Ersteres verursacht die Empfindlichkeit dieser Filme für das Eindringen von Feuchtigkeit über die vorgegebenen hydrophilen Emulgatorhüllen und die damit verbundene Herabsetzung der inneren Festigkeit dieser Beschichtungen durch Aufnahme von Wasser. Die Anreicherung von Emulgator auf der Oberfläche verursacht eine Schwächung der Filmfestigkeit an der Oberfläche und behindert die Adhäsion.

Beim Einsatz von synthetischen Schmelzhaftklebern ist zu beachten, dass die Herstellung dieser Polymeren im weit überwiegendem Maße mittels Polymerisationen in Lösemitteln abläuft, die anschließend vor der Beschichtung aus dem Polymer verdampft und rückgewonnen werden. Dementsprechend wird die Lösemittelrückgewinnung bei der Beschichtung von Haftklebern auf diese Weise lediglich vor die Beschichtungsstufe verlegt und etwas weniger aufwendig gestaltet als die zur Zeit noch gängige Rückgewinnung aus der Abluft der Trockenkanäle. Das Verfahren ist aber keineswegs als frei von Lösemitteleinsatz zu bezeichnen, zumal das rückgewonnene Lösemittel wegen Verunreinigungen durch Hilfsstoffe aus der Polymerisation nicht in geschlossenem Kreislauf verwendet werden kann , sondern zwischenzeitlich aufgearbeitet werden muss. Beispiele für diese Verfahrensweise werden in der EP Anmeldung 0 621 326 und in der EP 0 436 159 aufgezeigt.

Für die Erzeugung von haftklebenden Beschichtungen mit Schmelzhaftklebern, die durch Polymerisation in wasserbasierten Dispersionen hergestellt werden, sind als Beispiele neben der eingangs erwähnten DE 2 455 133 die US 4 906 421 und US 5,716,669 zu nennen. In diesen Patentschriften wird die Verfahrensweise zur

Entfernung der Wasserphase mittels speziell gestalteter Extruderschnecken und das anschließende Extrudieren der Dispersion durch eine Breitschlitzdüse beschrieben. Hierzu wird in den US 4 906 421 und US 5 716 669 eine Extrudiertechnik aufgezeigt, bei der das Wasser zwischen den Dispersionsteilchen entfernt wird und eine Filmbildung durch Zusammenlagern der Dispersionspartikel erzielt wird. Über die Zusammensetzung der Dispersionen wird lediglich eine Anzahl gängiger Ausgangsstoffe aufgezählt und ein Konzentrationsbereich des Polymers genannt. Eine Verarbeitung über die molekulardisperse Schmelzphase, in der die einzelnen Polymerketten, wie bei in homogener Phase erzeugten Schmelzhaftklebern üblich, untereinander verschiebbar vorliegen, wird nicht aufgezeigt. In der eingangs genannten DE 2 455 133 wird die Herstellung molekulardisperser, schmelzbarer, in Dispersion erzeugter Haftklebeteilchen beschrieben. So werden als Stabilisierungsmittel für die Polymerisation in Dispersion gängige wasserlösliche Polymere wie Polyvinylalkohol und als Initiatoren die allgemein bekannten durch thermische Spaltung Radikale erzeugenden Substanzen genannt und die wesentliche Qualitätsverbesserung der Haftklebeschichten durch Vernetzung nach der Verfilmung mit energiereicher Strahlung beschrieben.

Bei Polymerdispersionen, die für Haftklebebeschichtungen aus der Schmelze eingesetzt werden sollen, sind aber z.B. die Polymerzusammensetzung, die Polymerkettenverzweigungen, die durchschnittlichen Kettenlängen und die Auswahl eines funktionsfähigen und thermisch hochbelastbaren, Stabilisatorsystems für die Polymerisation von entscheidendem Einfluss auf die Verarbeitungsfähigkeit und die Qualität der erzeugten Produkte.

Viele der im Handel erhältlichen Haftkleberdispersionen, die den wenigen in den oben genannten Patentschriften erwähnten Kriterien entsprechen, sind aus der Schmelze nicht verarbeitbar, da sie beim Abdampfen des Wassers rasch thermisch zu unschmelzbaren Polymeren vernetzen und im Extruder allenfalls nur aufkonzentriert werden können oder nicht molekulardisperse Filmstrukturen, ähnlich denen aus Dispersionen getrockneten Beschichtungen mit den bekannten Nachteilen bilden. Selbst die in der DE 2 455 133 beschriebenen Polymerdispersionen, die mittels Reglern im Polymerisationsgrad abgesenkt sind und dadurch für den Schmelzauftrag besser geeignet sind, verursachen bei der Verarbeitung Schwierigkeiten, da z.B. der als Dispersions-Stabilisator eingesetzte Polyvinylalkohol bei der hohen thermischen Belastung Vernetzungen mit dem Polymer verursacht und damit die "runability" der Beschichtungsanlage durch Krusten- und Stippenbildung verschlechtert. Ausgelöst wird diese Gelbildung aus Polyvinylalkohol durch die Anwesenheit von funktionellen Gruppen z.B. Estergruppen, die in allen (Meth)acrylatpolymeren anwesend sind. Weitere Emulgatorreste, die nach dem Abfiltrieren der Wasserphase zusammen mit Restwasser an den polymeren Dispersionspartikeln haften bleiben, verursachen störende Schaumbildung im Extrusionsprozess.

Einen weiteren Störfaktor bilden die Mikrogele, die sich bei der Polymerisation in wässriger Dispersion normaler Weise bilden, so dass die weit überwiegende Zahl der im Handel erhältlichen Dispersionen von haftklebenden Polymeren nicht oder nur in mehr oder weniger geringen Anteilen schmelzbar und nicht oder nur in disperser Struktur extrudierbar sind. Besonders problematisch wird dieser durch den Polymerisationsmechanismus vorgeprägte oder beim Trocknen erzeugte Gelanteil für eine definierte Vernetzung nach der Filmbildung aus der Schmelze.
Wie in der DE 2 455 133 bereits beschrieben, ist die Vernetzung von Schmelzhaftkleber-Beschichtungen durch energiereiche Strahlung ein elegantes Verfahren zur Erhöhung der Filmfestigkeit (Kohäsion). Wie alle radikalischen Vernetzungen führt auch diese zu unschmelzbaren Polymeren und muss daher nach der Extrusion durchgeführt werden. Ohne eine nachträgliche Vernetzung haben Schmelzhaftkleber-Beschichtungen nur eine geringe Festigkeit und sind daher wegen der für die Filmbildung aus der Schmelze erforderlichen eingeschränkten Kohäsion nur von geringer Qualität. Der für eine Vernetzung durch Elektronenstrahlen erforderliche Zusatz von z.B. einem mehrfach ungesättigten Monomer muss vor der Extrusion in die Schmelze eingearbeitet werden.

Für eine störungsfreie, wirtschaftliche Prozessführung und hohe Qualität der erzeugten Beschichtungen müssen alle vernetzenden Faktoren wie Mikrogelbildung, thermische oder mechanisch ausgelöste Gelbildung durch radikalische Vernetzung innerhalb des Polymers oder über die zugesetzten mehrfach ungesättigten Monomere sowie Vernetzung über funktionelle Gruppen innerhalb der Polymerketten oder mit den zugesetzten Dispersions-Stabilisatoren, die bei der anschließenden Belastung durch den Trocknungs- und Extrusionsprozess eine Gelbildung vor der Filmbildung auslösen, vermieden werden. Wünschenswert ist aus ökologischer Sicht außerdem ein Herstellverfahren dieser Schmelzhaftkleber, bei dem die Konzentration des Polymeren in der wässrigen Phase möglichst hoch ist und möglichst geringe Mengen an mit Chemikalien verunreinigtem Wasser anfallen.

Wie die Verfahrensweise gemäß DE 24 55 133 gezeigt hat, lassen sich die dort beschriebenen gut abfiltrierbaren Polymer-Partikel in einem Konzentrationsbereich von 20 Gew.% - ca. 50 Gew.% in Dispersion herstellen. Durch Abtrennung des Polymeren vor dem Aufschmelzen mittels Filtration wird ein Anteil des störenden Stabilisators Polyvinylalkohol ausgewaschen. Die insgesamt anfallende Menge an chemisch verunreinigten Abwässern ist aber beträchtlich. Zudem ist der Filtrationsprozess kostenaufwendig. Außerdem verbleiben mehrere Gew.% anhaftendem Wassers mit Emulgatoren und polymerem Stabilisator im Filterkuchen. Das Ziel der Erfindung ist die Beseitigung bzw. Verminderung der oben aufgezählten Störfaktoren.

### Beschreibung der Erfindung

Für die Polymerisation in wässriger Dispersion wird ein Herstellverfahren aufgezeigt, mit dem schmelzbare Polyacrylate in einem Konzentrationsbereich von 68 Gew%-87 Gew.% hergestellt werden können, die nach Abdampfen des Wassers z.B. in einem beheizten Knetet unter Unterdruck über eine Breitschlitzdüse mit vorgeschalteter Zahnradpumpe zu einem Haftklebfilm geformt werden. Anstelle des Kreters kann auch ein Extruder mit Entgasungszonen und Mischeinheiten oder eine Kombination beider Verfahren eingesetzt werden. Die Filme sind molekulardispers unvernetzt und entsprechen in ihrer Struktur weitgehend den aus homogener Phase z.B. den aus Lösung erzeugten hochwertigen Polyacrylatschmelzhaftklebefilmen. Sie werden vorzugsweise anschließend durch energiereiche Strahlung vernetzt. Trotz der hohen Verdampfungsenergie des Wassers kann dieses Verfahren mittels der hohen Feststoffkonzentration der Dispersionen durch Abdampfen des Wassers ökologisch wirtschaftlich gestaltet werden. Als Ausgangsstoffe dienen als Hauptbestandteile wasserunlösliche (Meth)Acrylester mit Seitenkettenlängen von C4 bis C 14. Daneben können in geringerer Menge härtende Anteile wie (Meth)acrylester mit kürzeren Seitenketten oder copolymerisierbare Monomere wie Vinylacetat oder Styrol eingesetzt werden. In weiteren Anteilen können auch (Meth)acrylsäure (Meth)acrylsäureamide oder andere copolymerisierbare Monomere mit funktionellen Gruppen mit verwendet werden. Zur Unterdrückung der Bildung von Mikrogel werden insbesondere radikalisch linear polymerisierende, in organischen Medien lösliche Initiatoren eingesetzt, die vor der Polymerisation in der Monomerphase gelöst werden. Damit der Schmelzbereich der Polymeren in einem Verarbeitungsbereich von 100 - 160 °C eingestellt werden kann, soll der Polymerisationsgrad durch Zusatz von Kettenlängenreglern begrenzt werden. Gängige Regler für radikalische Polymerisationen in Dispersion sind die Alkylthiole, insbesondere Dodekanthiol, oder Tetrabrommethan, die für diesen Zweck eingesetzt werden. Wegen der deutlichen Geruchsbelästigung und Toxizität werden diese Regler aber nicht bevorzugt für die erfindungsgemäßen Schmelzhaftkleber verwendet. Vorzuziehen sind Polymerkettenlängenbegrenzungen durch andere Regelmechanismen wie, z.B., das Einpolymerisieren von Fumarsäureestern, Styrol oder Vinylethern, insbesondere Cyclohexenylethern, in kleinen Mengen, die eine Einstellung des gewünschten Polymerisationsgrades ermöglichen. Geeignet ist auch der Zusatz geringer Mengen von Harzen bei der Polymerisation. Insbesondere hydrophile Harze, wie die stark sauren Kolophoniumharz- Säuren, zeigen eine gute Reglerwirkung, ohne die Dispersion zu destabilisieren , so dass in Anwesenheit von ca. 1 Gew.% - 5 Gew.% dieser Klebharze in der Monomermischung gelfreie, schmelzbare Haftkleber in stabiler Dispersion hergestellt werden können, die frei von toxischen und geruchsintensiven Restmengen an Reglern sind.

Als Stabilisatoren für die Polymerisation in wässriger Dispersion werden insbesondere Kombinationen von wasserlöslichen Polymeren mit anionischen Emulgatoren eingesetzt. Wasserlösliche Polymere, die in der Schmelze der Polyacrylate mit ihren funktionellen Gruppen thermische Vernetzungen auslösen können, wie dies z.B. bei Carboxyl- und Hydroxylgruppen möglich ist, sind für diesen Zweck ungeeignet. Bewährt haben sich Polyacrylamide und andere wasserlösliche Polymere mit Amidfunktionen wie z.B. Polyvinylpyrrolidon. Die Polymerisationsgrade dieser Stabilisatoren sind vorzugsweise niedrig eingestellt, da hohe Polymerisationsgrade die Gelbildung unter thermischer Belastung fördern.

Als anionische Emulgatoren sind die gängigen alkylsulfonsauren Salze, wie sie üblicher Weise für die Emulsionspolymerisation von Acrylderivaten verwendet werden, nur bedingt geeignet. Gut geeignet sind z.B. wasserlösliche Salze von sulfatierten Ölsäurederivaten wie das Na-Salz von sulfatiertem Ölsäure-dibutylamid, dessen Einsatz stabile schaumarme Dispersionen ergibt, aus denen das Wasser ohne stärkere Schaumbildung abgedampft werden kann. Zur weiteren Stabilisierung der Dispersionen können insbesondere bei der Verwendung von Klebharzen als Regler nichtionische Emulgatoren zusätzlich verwendet werden.

Die Teilchengrößenverteilung der Polyacrylat-Dispersionen, die mit den oben genannten Initiatoren, Reglern, Stabilisierungsmitteln und Emulgatoren hergestellt werden, ist zumindest bimodal. Neben einem Perlpolymer mit Teilchendurchmessern im Bereich von ca. 10 µm - 200 µm liegt ein Emulsionspolymer mit Teilchendurchmessern im Bereich von ca. 0,1 µm - 2µm vor. Die Mengenverteilung zwischen diesen Bereichen und die Teilchengrößen innerhalb der Bereiche können durch die Qualität der Stabilisatoren und Emulgatoren und deren Mengenverhältniszueinander gesteuert werden. Auf diese Weise können Feststoffkonzentrationen bis in den Bereich 68 Gew.% - 87 Gew.% in den Dispersionen polymerisiert werden.

Nach Abdampfen des Wassers, vorzugsweise unter Unterdruck in den Entgasungszonen von Extrudern oder in beheizbaren Knetern, werden dem Polymer vor der Extrusion durch eine Breitschlitzdüse monomere mehrfunktionelle Acrylate mit verhältnismäßig hohem Molekulargewicht und entsprechend niedrigem Dampfdruck in Mengen von 0,1 Gew.% - 7 Gew.% mittels geeigneter Mischelemente zugemischt werden, die nach der Verfilmung mittels Breitschlitzdüse oder Walzen mit einer β-Strahlendosis im Bereich von 10 k Gy - 80 k Gy eine ausreichende Vernetzung des Haftklebefilms ermöglichen. In gleicher Weise können zur Erhöhung der Klebkraft dem Polymer bis zu 35 Gew.% Klebharze und Alterungsschutzmittel in einer Menge, die die Strahlenvernetzung nicht zu stark einschränkt, zugemischt werden.

Außerdem können die klebtechnischen Eigenschaften der erfindungsgemäßen Schmelzhaftkleber durch Zumischen von Füllstoffen, wie Titandioxid und anderen anorganischen oder organischen Materialien , die entsprechend dem Stand der Technik bei Haftkleberzubereitungen üblich sind, oder Weichmachern wie z.B. Dioctylphthalt oder Zitronensäureestern verändert werden. Als geeignete Faserstoffe haben sich zur Erhöhung der Kohäsion Kurzphasen ( 1mm - 3 mm Faserlänge) von Polyestern oder Cellulose in Mengen von 0,5 Gew.% - 4 Gew.% bez. Feststoff als geeignet erwiesen. Diese Zusätze können in trockner Form in die Dispersionen eingemischt werden oder nach dem Entziehen des Wassers durch Mischaggregate in die Schmelze eingearbeitet werden. Kautschukartige Füllstoffe können z.B. in Form von Naturkautschuk-Latex oder Kunstkautschuk-Dispersionen, wie Butadien/Styrol- Latices etc. in die Schmelzhaftkleber-Dispersionen vor dem Wasserentzug in Mengen bis zu ca. 70 Gew.% eingemischt werden. Falls hierbei Agglomerationen wegen Unverträglichkeit auftreten, kann dies durch Neutralisation oder Einstellung eines schwach basischen pH Werts der Schmelzhaftkleber-Dispersionen mit Ammoniak oder basischen Puffermedien beseitigt werden. Die erfindungsgemäße Herstellung von Haftklebefilmen auf Basis von (Meth)Acrylaten beruht nach den vorangegangenen Erläuterungen auf den folgenden Verfahrensschritten:

### 1. Herstellung von haftklebenden, vernetzungsfreien, schmelzbaren Polyacrylaten in hoch konzentrierter wässriger Dispersion.

### Zusammensetzung der monomeren Ausgangsstoffe:

99,5 Gew.% (Meth)acrylester mit Esterresten von C4-C12 einzeln oder im Gemisch, 0,1 Gew. % - 10 Gew. % (Meth)acrylsäure sowie härtende Monomere, wie (Meth)acrylester mit C1-C3, Styrol oder Vinylacetat in Anteilen bis zu 40 Gew.%. Zusätzlich können weitere copolymere Monomere mit funktionellen Gruppen wie Amid- oder Nitrilgruppen enthalten sein.

### Zusammensetzung der Stabilisatoren:

Als Dispersionsstabilisatoren werden wasserlösliche Polymere, vorzugsweise Polyvinylpyrrolidon, in Mengen von 0,1Gew.% - 4 Gew.%, anionische Emulgatoren von 0,05 Gew.% - 2 Gew.% und nichtionische Emulgatoren bis zu 4 Gew.% bez. auf die Monomeren einzeln oder vorzugsweise im Gemisch in einer Gesamtmenge bis 4 Gew.% bez. auf Monomere eingesetzt.

### Durchführung der Polymerisation:

Es wird eine Keimphase hergestellt, die 20 Gew.% - 50 Gew.% der Monomeren und die gesamte wässrige Phase mit den Stabilisatoren enthält. Der Initiator wird in einer Menge von 0,1Gew.% - 0,8 Gew.% bez. auf die gesamte Monomerphase in den Monomeren der Startphase gelöst. Der Regler bzw. die entsprechenden Comonomeren werden ebenfalls in der Monomerphase der Keimphase in einer Menge von 0,2 Gew.% - 20 Gew.% bez. auf die gesamte Monomermenge gelöst. Anschließend wird die Polymerisation unter den für Polymerisationen in wässriger Dispersion üblichen Bedingungen durchgeführt und nach Ausbildung der polymeren Keimphase werden die weiteren Monomeren zudosiert bis eine Polymerkonzentration von bis zu 87 Gew.% in der wässrigen Dispersion erreicht ist und der Restmonomergehalt bis unter 0,5 Gew.% bez. Polymer gesunken ist. Beim Eindosieren der Monomeren hat es sich als vorteilhaft erwiesen, härtende Monomere wie z.B. Styrol zumindest in Anteilen getrennt von der Monomermischung einzudosieren und dadurch als Seitenketten aufzupfropfen. Damit wird das Fließverhalten der Schmelze verbessert. Neben dieser Fahrweise kann auch die gesamte Monomermenge und der Regler in der wässrigen Phase mit den Stabilisatoren dispergiert werden und unter Zudosieren des Initiators eine Keimphase erzeugt werden, in die weitere Monomerdispersion eindosiert wird. Die Polymerisation verläuft im Temperaturbereich zwischen ca. 50°C - 95°C innerhalb von ca. 4 - 10 h. Abhängig von der Reaktionsführung, der Initiatorkonzentration und dem Reglergehalt werden rel. Viskositäten (25,00°C) in Toluollösungen des getrockneten Polymers im Bereich von 1,400 - 5,600 eingestellt.

Die Teilchengrößen können abhängig von Reaktionsführung und Stabilisatorsystem über mehrere Bereiche von ca. 1µm Ø bis ca. 1mm Ø verteilt sein.

### 2. Herstellung der Haftklebefilme.

### Entfernung der wässrigen Phase:

Das Abdampfen des Wassers geschieht entweder in Doppelschneckenextrudern mit Unterdruck - Entgasungssektionen oder in beheizbaren Knetern mit Unterdruckentgasung entsprechend dem Stand der Technik. Eine teilweise Aufkonzentration der Dispersionen in Stripp- oder Knetaggregaten mit Unterdruck - Entgasung kann vorgeschaltet sein.

### Zumischen von Klebharzen, Füllstoffen und vernetzenden Bestandteilen:

Die Klebharzgranulate und Füllstoffe (s.o.) können in Mischzonen der Extruder oder als Dispersionen in das Polymer eingearbeitet werden. Die Klebharzanteile können bis zu 40 Gew.% bez. auf Feststoff, vorzugsweise 10 Gew.%- 30 Gew.% betragen. Ein Zusatz von Klebharzdispersionen in das wässrige System ist zwar möglich, wird aber wegen der damit verbundenen Erhöhung des Anteils von Wasser und Stabilisatorhilfsstoffen sowie erhöhten Rohstoffkosten nicht bevorzugt. Zusätze von Weichmachern zur Erhöhung des Tack oder zur Verbesserung der Verarbeitbarkeit sind ebenfalls möglich.

Die für die Strahlenvernetzung förderlichen mehrfunktionellen (Meth)acrylate, wie z.B. Trimethylolpropantriacrylat oder Polypropylenglykoldiacrylat werden wie die Harzanteile in Mischsektionen der Extruder nach Entfernen des Hauptanteils an Wasser in das Polymer eingearbeitet. Gleiches gilt für Sensibilisatoren für die UV-Vernetzung, falls diese nicht bereits als copolymerisierbare Photoinitiatoren in das Polymer bei der Polymerisation eingebaut wurden.

### Filmbildung und Strahlenvernetzung:

Für die Filmbildung wird die Extrusion über Breitschlitzdüse mit vorgeschalteter Zahnradpumpe bevorzugt. Die Temperatur der Schmelze liegt vorzugsweise im Bereich 120° C - 140°C. Zur Verringerung der Filmdicke kann eine Reckzone nach geschaltet sein. Eine Filmformung über Walzennipp mit vorgeschalteter Dosierextrusion ist ebenfalls entsprechend dem bereits bestehenden Stand der Technik möglich. Restmengen an Wasser können thermisch oder mittels Hochfrequenz-bzw. Mikrowellentrockner aus dem Film entfernt werden. Die Strahlenvernetzung erfolgt, falls erforderlich, entsprechend dem Stand der Technik mittels UV-Strahlung im Bereich von ca. 2 J/cm² - 10 J/cm² Absorption bzw.
10 kGy - 100 kGy Elektronenstrahlung. Der Gelanteil ( in Toluol (20°C) unlöslicher Anteil des Feststoffs) liegt nach der Strahlenvernetzung zwischen ca. 10 Gew.%-80 Gew.%. In Ausnahmefällen, bei denen für den Anwendungszweck keine höhere Kohäsivität der Haftklebefilme gefordert wird, kann auf eine Vernetzung und die dafür erforderlichen Hilfsstoffe verzichtet werden.

Es können entsprechend dem Stand der Technik für die Verarbeitung von Schmelzhaftklebern einseitig haftende sowie beidseitig haftende Bänder oder Stanzlinge hergestellt werden.

Im Anschluss wird die Erfindung an Beispielen erläutert.

Experimenteller Teil

### Beispiel 1

Die Polymerisation der Dispersion wird in einer 2,5 L Glasapparatur, ausgerüstet mit Ankerrührer, Thermometer, Rfl.-Kühler, Stickstoffeinleitrohr und Dosiervorlage durchgeführt.

Zur Herstellung der Keimphase werden 66,82g 2 Ethylhexylacrylat, 66,82 g n-Butylacrylat, 5,72g Methylmethacrylat und 2,14g Methacrylsäure sowie 18,5g eines sauren Klebharz ( Resin 731 D SZ 156 Fa Abieta) und 5,1g eines Azoinitiators (Vazo 67 Fa Du Pont) zu einer klaren Lösung gemischt und in 150 g Wasser (entionisiert), das 4,2 g anionischen Emulgator (Lutensit AFK Fa BASF ) 8,2 g nichtionischen Emulgator (Lutensol AT 50 Fa BASF) und 8,5 wasserlöslichen polymeren Stabilisator (Kollidon 25 Fa BASF) enthält, dispergiert.

Nach Inertisierung durch Spülung mit Stickstoff wird die Keimphase bei 67°C initiiert und in einem Temperaturbereich von 67°C - 76°C innerhalb 20 min polymerisiert. Danach wird ein Monomergemisch aus 330.54 g n-Butylacrylat, 330,54 g 2 Ethylhexylacrylat, 28,28 g Methylmethacrylat und 10,57 g Methacrylsäure innerhalb 80 min bei einer Reaktionstemperatur. von 72°C in das polymerisierende Gemisch eindosiert. Nach einer Reaktionszeit von 6 h wird die erhaltene Polymerdispersion auf RT abgekühlt.

Der Gehalt an Polymer beträgt 84,5 Gew.%.

Der Gehalt an Restmonomer beträgt 0,8 Gew.% bez. auf Feststoff.

Die Teilchengrößenverteilung liegt in einem Bereich von 12 µm - 50 µm Ø, der ca. 70 Gew.% des Polymers beträgt, wobei der Hauptanteil in diesem Bereich bei ca. 15 µm Ø liegt. Der restliche Anteil an Polymer liegt in einem Teilchengrößenbereich zwischen ca. 0,5 µm - 5 µm Ø.

Die Dispersion wird in einem 3 L vakuumfesten Laborkreter, ausgerüstet mit Sigmaschaufeln, Kondensationsfalle und Vakuumpumpe entwässert. Dabei werden zu Beginn unter Kneten der pastenartigen Dispersion eine Temperatur 90°C und ein Unterdruck von 200 mbar eingestellt, die im Verlauf von 25 min auf 150°C und 50 mbar Unterdruck gesteigert werden. Es resultiert eine wasserklare nahezu farblose, homogene molekulardisperse Schmelze.

Aus 0,5 g des entwässerten Polymers wird in 50 ml Toluol eine wasserklare, gelfreie Lösung hergestellt und daraus die rel. Viskosität bestimmt. Sie beträgt 2,533 bei 25°C.

Die Schmelze wird mittels Förderdruck einer Zahnradpumpe in einer Breitschlitzdüse (80 mm Breite) bei 140 °C zu einem Film von 50 µm Dicke geformt und auf einer mit Haftvermittler ausgerüsteten Mylar-Folie ( 27 µm ) verankert.

Die klebtechnischen Werte werden mittels Verklebungen auf geschliffenen Stahlplatten (V4A, Körnung 240) geprüft.

Klebkraft 180° Abzugwinkel 300 mm /min : 12 N / cm unter Kohäsionsbruch des Haftklebefilms.

Zeitstandwert bei 23°C Verklebungsfläche 13 x 20 mm² : 3 min mit Kohäsionsbruch des Haftklebefilms.

### Beispiel 2

Die Herstellung einer Schmelzhaftkleber-Dispersion wird wie im Beispiel 1 beschrieben wiederholt. Nach dem Entzug des Wassers werden in die Schmelze 1 Gew.% bez. auf Polymer Polyethylenglycol 600 Diacrylat ( Fa Cray Valley), 9 Gew.% bez. auf Polymer Glycerinester eines hydrierten Kolophoniumharzes (Foral 85, Firma Hercules) und 18 Gew.% eines aromatischen KW-Harzes (Norsolene M 1080, Fa Cray Valley) im Kneter zugemischt. Anschließend wird die Schmelze, wie im Beispiel 1 beschrieben, zu einem Klebband-Muster verarbeitet. Anschließend wird die Haftkleberschicht durch die Folie hindurch mit 70 kGy Elektronenstrahlung vernetzt.

### Klebtechnische Werte:

Klebkraft (s.o.): 5,5 N/cm ohne Kohäsionsbruch
Zeitstandwert (s.o.): 950 min mit Kohäsionsbruch

## Patentansprüche

1. Verfahren zur Herstellung von Schmelzhaftklebern aus wässrigen Dispersionen auf Polyacrylatbasis und daraus hergestellte haftklebende Artikel, wobei hochkonzentrierte wässrige Dispersionen mit Polymergehalten zwischen 68 Gew.% - 87 Gew.% an gelfreien molekulardispers schmelzbaren Polymerteilchen mit zumindest bimodaler Größenverteilung in Größenbereichen zwischen 0,5 µm -1000 µm ⌀ erzeugt werden,
**dadurch gekennzeichnet, dass**
eine Keimphase hergestellt wird, die 20 bis 50 Gew.-% der zu polymerisierenden Monomere, die gesamte wässrige Phase sowie Stabilisatoren enthält; in dieser Phase 0,1 bis 0,8 Gew.-% (bezogen auf die gesamte Monomerphase) Initiatoren sowie 0,2 bis 20 Gew.-% (bezogen auf die gesamte Monomerphase) Kettenlängen regelnde Substanzen zugesetzt werden, und anschließend die Polymerisation unter den für wässrige Polymerisationen üblichen Bedingungen durchgeführt wird, wobei die übrigen Monomere zudosiert werden.

2. Verfahren nach Anspruch 1, bei dem 99,5 Gew.% - 60 Gew.% (Meth)acrylester mit Esterresten von C4 - C12 einzeln oder im Gemisch , 0 Gew.% - 10 Gew.% (Meth)acrylsäure oder - amide sowie bis zu 40 Gew.% härtende Monomere, wie (Meth)acrylester oder Vinylester mit Esterresten C1 - C3, Styrol oder andere copolymerisierbare Monomere mit funktionellen, thermisch ausreichend stabilen Gruppen wie Amid oder Nitrilgruppen als Monomere eingesetzt werden.

3. Verfahren nach einem der Ansprüche 1 - 2, bei dem als Stabilisatoren für die Dispersionsherstellung wasserlösliche, bei der Schmelztemperatur stabile Stoffe, vorzugsweise Amidgruppen tragende kurzkettige Polymere und nichtionische sowie anionische schaumarme Emulgatoren in einer gesamt Konzentration bis zu 4 Gew.% eingesetzt werden.

4. Verfahren nach einem der Ansprüche 1 - 3, bei der die Kettenlängen des Polymers durch Anwesenheit der Kettenlängen regelnden Substanzen während der Polymerisation begrenzt werden, vorzugsweise durch Comonomere aus der Gruppe der Vinylether, vorzugsweise Cyclohexenylethern, Fumar- oder Maleinestem sowie durch Styrol oder durch hydrophile Kolophoniumharze in Mengen bis zu 10 Gew.% bez. Polymer.

5. Verfahren nach einem der Ansprüche 1 - 4, **dadurch gekennzeichnet, dass** als Initiatoren für die Polymerisation linear polymerisierende, wasserunlösliche, im Monomergemisch lösliche Initiatoren, vorzugsweise Azoinitiatoren, in Mengen bis zu 1 Gew.% bezogen auf das Gesamtgemisch der Monomermischung gewählt werden.

6. Verfahren nach einem der Ansprüche 1 - 5, bei dem gelfreie in organischen Lösemitteln lösliche, schmelzbare Polymere entstehen, die eine relative Viskosität bei 25°C in Toluol von 1,680 - 5,000 und einen Schmelzbereich zwischen 80°C - 170°C haben

7. Verfahren nach einem der Ansprüche1 - 6, bei dem die Polymerdispersion unter Unterdruck in Knetern oder Extrudern mit Entgasungsvorrichtungen in Temperaturbereichen zwischen 90°C - 160°C entwässert werden und über den Förderdruck von Zahnradpumpen und/oder Extruderschnecken als homogene, mofekulardisperse Schmelze über eine Breitschlitzdüse verfilmt werden.

8. Verfahren nach einem der Ansprüche1 - 7, bei dem vor der Entwässerung in die Schmelzhaftkleberdispersion Naturkautschuk-Latices oder Kunstkautschuklatices in Mengen bis zu 70 Gew. % bez. auf Acrylatpolymer als elastische Füllstoffe eingemischt werden und/oder vor oder nach der Entwässerung bis zu 40 Gew.% anorganische Füllstoffe und/oder bis zu 30 Gew, % in Polyacrylat verträgliche Weichmacher zugemischt werden.

9. Verfahren nach einem der Ansprüche 1 - 8, bei dem nach der Entwässerung bis zu 50 Gew.%, bezogen auf gesamt Polymer oder 35 Gew.%, bezogen auf Acrylatpolymer an Klebharzen, vorzugsweise auf KW-Basis mit aromatischen Anteilen, eingemischt werden

10. Verfahren nach einem der Ansprüche 1 - 10, bei dem nach der Entwässerung bis zu 2 Gew.% an UV-Photoinitatoren der Schmelze zugemischt bzw. in das Acrylatpolymer einpolymerisiert werden und/oder bis zu 5 Gew.% mehrfach ungesättigte (Meth)acrylatmonomere in die Schmelze eingearbeitet werden und der aus der Schmelze gebildete Film mittels 2 J/cm² - 10 J/cm² UV-Strahlung bzw. 10 kGy - 100 kGy Elektronenstrahlung vernetzt wird, so dass ein unlöslicher Anteil bis zu 95 Gew.% Acrylatpolymer entsteht.

11. Verwendung der Schmelzhaftkleber gemäß einem der Ansprüche 1 - 10 zur lösemittelfreien Herstellung von einseitig bzw, beidseitig haftklebrig ausgerüsteten Bändern oder Stanzlingen.

## Claims

1. Process for preparing hot-melt pressure-sensitive adhesives from aqueous dispersions based on polyacrylate, and pressure-sensitively adhesive articles produced therefrom, highly concentrated aqueous dispersions with polymer contents between 68% by weight and 87% by weight of gel-free, molecularly-dispersely meltable polymer particles with an at least bimodal size distribution in size ranges between 0.5 µm and 1000 µm ⌀ being produced, **characterized in that** a seed phase is prepared which contains 20% to 50% by weight of the monomers to be polymerized, the entire aqueous phase, and stabilizers; in this phase 0.1% to 0.8% by weight (based on the overall monomer phase) of initiators and also 0.2% to 20% by weight (based on the overall monomer phase) of chain length regulator substances are added, and subsequently the polymerization is conducted under the conditions customary for aqueous polymerizations, the remaining monomers being metered in.

2. Process according to Claim 1, in which 99.5% by weight - 60% by weight (meth)acrylic esters with ester radicals of C4 - C12, individually or in a mixture, 0% by weight - 10% by weight (meth)acrylic acid or methacrylamides, and up to 40% by weight of hardening monomers, such as (meth)acrylic esters or vinyl esters with ester radicals C1 - C3, styrene or other copolymerizable monomers with functional groups of sufficient thermal stability, such as amide or nitrile groups, are used as monomers.

3. Process according to one of Claims 1 - 2, in which water-soluble substances which are stable at the melting temperature, preferably short-chain polymers which carry amide groups, and nonionic and also anionic low-foam emulsifiers, in an overall concentration of up to 4% by weight, are used as stabilizers for preparing the dispersion.

4. Process according to one of Claims 1 - 3, in which the chain lengths of the polymer are restricted by the presence of the chain-length-regulating substances during the polymerization, preferably by comonomers from the group of the vinyl ethers, preferably cyclohexenyl ethers, fumaric esters or maleic esters, and also by styrene or by hydrophilic rosins in amounts of up to 10% by weight based on polymer.

5. Process according to one of Claims 1 - 4, **characterized in that** the initiators chosen for the polymerization are linearly polymerizing, water-insoluble initiators which are soluble in the monomer mixture, preferably azo initiators, in amounts of up to 1% by weight based on the overall monomer mixture.

6. Process according to one of Claims 1 - 5, in which meltable polymers which are soluble without gel in organic solvents are formed which have a relative viscosity at 25°C in toluene of 1 680 - 5 000 and a melting range between 80°C and 170°C.

7. Process according to one of Claims 1 - 6, in which the polymer dispersion is dewatered under subatmospheric pressure in kneading devices or extruders having devolatilizing means in temperature ranges between 90°C and 160°C and, by way of the conveying pressure of toothed wheel pumps and/or extruder screws, is filmed, in the form of a homogeneous, molecularly disperse melt, via a slot die.

8. Process according to one of Claims 1 - 7, in which prior to the dewatering natural rubber latices or synthetic rubber latices in amounts of up to 70% by weight based on acrylate polymer are mixed as elastic fillers into the hot-melt pressure-sensitive adhesive dispersion, and/or before or after the dewatering up to 40% by weight of inorganic fillers and/or up to 30% by weight of polyacrylate-compatible plasticizers are admixed.

9. Process according to one of Claims 1 - 8, in which, after the dewatering, up to 50% by weight, based on overall polymer, or 35% by weight, based on acrylate polymer, of tackifier resins, preferably based on hydrocarbons with aromatic fractions, are mixed in.

10. Process according to one of Claims 1 - 10, in which, after the dewatering, up to 2% by weight of UV photoinitiators are admixed to the melt and/or incorporated into the acrylate polymer by copolymerization and/or up to 5% by weight of polyunsaturated (meth)acrylate monomers are incorporated into the melt and the film formed from the melt is crosslinked by means of 2 J/cm² - 10 J/cm² UV radiation and/or 10 kGy - 100 kGy electron beams, so as to give an insoluble fraction of up to 95% by weight acrylate polymer.

11. Use of the hot-melt pressure-sensitive adhesives according to one of Claims 1 - 10 for the solvent-free preparation of punched elements or tapes which are pressure-sensitively adhesive on one or both sides.

## Revendications

1. Procédé pour la préparation d'autoadhésifs en masse fondue à partir de dispersions aqueuses à base de polyacrylate et d'objets autoadhésifs réalisés à partir de ceux-ci, dans lequel on obtient des dispersions aqueuses hautement concentrées avec des teneurs polymères entre 68% en poids-87% en poids de particules polymères fusibles à dispersion moléculaire exemptes de gel présentant une répartition des grosseurs au moins bimodale dans les plages de grosseurs entre 0,5 µm-1000 µm de ⌀, **caractérisé en ce qu'**on prépare une phase de germes, qui contient 20 à 50% en poids des monomères à polymériser, la phase aqueuse complète ainsi que des stabilisateurs ; on ajoute à cette phase 0,1 à 0,8% en poids (par rapport à la totalité de la phase de monomères) d'initiateurs ainsi que 0,2 à 20% en poids (par rapport à la totalité de la phase de monomères) de substances d'allongement de chaîne, puis on réalise la polymérisation dans les conditions usuelles pour la polymérisation aqueuse, les autres monomères étant ajoutés en dosant.

2. Procédé selon la revendication 1, dans lequel on utilise 99,5% en poids-60% en poids d'ester de (méth)acryle avec des radicaux ester en C₄-C₁₂, seuls ou en mélange, 0% en poids-10% en poids d'acide (méth)acrylique ou amide de l'acide (méth)acrylique ainsi que jusqu'à 40% en poids de monomères durcisseurs, tels qu'un ester de (méth)acryle ou un ester de vinyle avec des radicaux ester en C₁-C₃, le styrène ou d'autres monomères copolymérisables avec des groupes fonctionnels, thermiquement suffisamment stables, tels que des groupes amide ou nitrile, comme monomères.

3. Procédé selon l'une quelconque des revendications 1-2, dans lequel on utilise, comme stabilisateurs pour la préparation de la dispersion, des substances solubles dans l'eau, stables à la température de fusion, de préférence des polymères à courte chaîne portant des groupes amide et des émulsifiants non ioniques ainsi qu'anioniques, pauvres en mousse, en une concentration totale jusqu'à 4% en poids.

4. Procédé selon l'une quelconque des revendications 1-3, dans lequel les longueurs de chaîne du polymère sont limitées par la présence des substances réglant la longueurs des chaînes pendant la polymérisation, de préférence par des comonomères du groupe des vinyléthers, de préférence les cyclohexényléthers, des esters de l'acide fumarique ou maléique ainsi que par du styrène ou par des résines de colophonium hydrophiles en des quantités jusqu'à 10% en poids par rapport au polymère.

5. Procédé selon l'une quelconque des revendications 1-4, **caractérisé en ce qu'**on choisit comme initiateurs pour la polymérisation des initiateurs polymérisant linéairement, insolubles dans l'eau, solubles dans le mélange de monomères, de préférence des initiateurs azo, en des quantités jusqu'à 1% en poids, par rapport au mélange total de monomères.

6. Procédé selon l'une quelconque des revendications 1-5, dans lequel il se forme des polymères exempts de gel, solubles dans des solvants organiques, fusibles, qui présentent une viscosité relative à 25°C dans du toluène de 1,680-5,000 et une plage de fusion entre 80°C-170°C.

7. Procédé selon l'une quelconque des revendications 1-6, dans lequel la dispersion polymère est déshydratée sous une dépression dans des malaxeurs ou des extrudeuses avec des dispositifs de dégazage dans des plages de température entre 90°C-160°C et est transformée en film via la pression d'alimentation de pompes à roue dentée et/ou de vis sans fin d'extrudeuse sous forme d'une masse fondue homogène, à dispersion moléculaire via une filière à large fente.

8. Procédé selon l'une quelconque des revendications 1-7, dans lequel on mélange, avant la déshydratation, dans la dispersion d'autoadhésif en masse fondue, des latex de caoutchouc naturel ou synthétique en des quantités jusqu'à 70% en poids par rapport au polymère d'acrylate en tant que charges élastiques et/ou on mélange, avant ou après la déshydratation, jusqu'à 40% en poids de charges inorganiques et/ou jusqu'à 30% en poids de plastifiant compatible dans le polyacrylate.

9. Procédé selon l'une quelconque des revendications 1-8, dans lequel on mélange, après la déshydratation, jusqu'à 50% en poids, par rapport au polymère total, ou 35% en poids par rapport au polymère d'acrylate, de résines poisseuses, de préférence à base d'hydrocarbures avec des proportions aromatiques.

10. Procédé selon l'une quelconque des revendications 1-10, dans lequel on mélange dans la masse fondue ou on copolymérise dans le polymère d'acrylate, après la déshydratation, jusqu'à 2% en poids de photo-initiateurs et/ou on incorpore dans la masse fondue jusqu'à 5% en poids de monomères de type (méth)acrylate polyinsaturés et le film formé à partir de la masse fondue est réticulé au moyen d'un rayonnement UV de 2 J/cm²-10 J/cm² ou d'un rayonnement électronique de 10 kGy-100 kGy, de telle manière qu'il se forme une proportion insoluble de polymère d'acrylate jusqu'à 95% en poids.

11. Utilisation de l'autoadhésif en masse fondue selon l'une quelconque des revendications 1-10 pour la préparation sans solvant de bandes ou des pièces découpées apprêtées de manière autoadhésive sur une ou deux faces.
